(19) **Europäisches Patentamt**

**European Patent Office**

**Office européen des brevets**

(11) Publication number: **0 355 438 B1**

## EUROPEAN PATENT SPECIFICATION

(45) Date of publication of patent specification: **28.09.94**   (51) Int. Cl.[5]: **C04B 20/10**, C01G 43/025, G21C 3/62

(21) Application number: **89113651.7**

(22) Date of filing: **25.07.89**

(54) **Method for passivating uranium oxides to control oxidation, and the oxidation resisting uranium product thereof.**

(30) Priority: **17.08.88 US 232965**

(43) Date of publication of application:
**28.02.90 Bulletin 90/09**

(45) Publication of the grant of the patent:
**28.09.94 Bulletin 94/39**

(84) Designated Contracting States:
**BE CH DE ES GB IT LI NL SE**

(56) References cited:
**DE-A- 3 227 868
US-A- 3 129 055
US-A- 3 872 022
US-A- 3 923 933
US-A- 4 052 330**

(73) Proprietor: **GENERAL ELECTRIC COMPANY
1 River Road
Schenectady New York 12305 (US)**

(72) Inventor: **Larson, Richard Ingwald
417 Pettigrew Drive
Wilmington North Carolina 28403 (US)**
Inventor: **Ringle, Richard Paul
102 Inlet Drive
Scotts Hill North Carolina 28405 (US)**
Inventor: **Harmon, John Lee
4250 Appleton Way
Wilmington North Carolina 28403 (US)**

(74) Representative: **Pratt, Richard Wilson
London Patent Operation
G.E. Technical Services Co. Inc.
Essex House
12/13 Essex Street
London WC2R 3AA (GB)**

EP 0 355 438 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to the manufacture of fissionable nuclear fuel comprising oxides of enriched uranium for use in nuclear reactors. Low oxygen ratio uranium oxides such as uranium dioxide typically exhibit a strong propensity for continuing oxidation which often results in deleterious properties for fuel processing and/or service. The invention is particularly concerned with measures for controlling or preserving a desired oxygen to uranium ratio introduced into newly formed particulate uranium oxides, and effectively precluding subsequent spontaneous oxidation of the oxygen susceptible uranium when thereafter subjected to processing operations which frequently entail conditions that foster oxidation.

Fissionable fuel grade uranium oxides for service in power generating nuclear reactors are commonly produced from uranium hexafluoride. There are two basic chemical procedures practiced in the industry for commercially carrying out this chemical conversion of uranium hexafluoride to uranium oxides for reactor fuel, and several variations on each.

One principal chemical conversion process is commonly referred to in this art as a "wet" process since the conversion reactions are affected by or carried out within an aqueous medium or liquid phase with the reactants in solution and/or as a solid suspension therein. Typically, this so-called wet process comprises hydrolyzing uranium hexafluoride ($UF_6$) in liquid water to form the hydrolysis product uranyl fluoride ($UO_2F_2$), adding ammonium hydroxide to the uranyl fluoride to precipitate the uranyl fluoride as solid ammonium diuranate [$(NH_4)_2 U_2O_7$], then dewatering the solids and calcining in a reducing atmosphere to produce an oxide of uranium (e.g. $UO_2$). This version of the wet process is frequently referred to as the "ADU" procedure since it normally entails the formation of ammonium diuranate.

The other principal chemical conversion process is commonly referred to in this art as the "dry" process since the reactions are mainly carried out in a gaseous medium and comprise vapor-phase reactions with respect to the components. Typically, this so-called dry process comprises either a one-step procedure or a two-step procedure. The one-step method simply consists of contacting uranium hexafluoride gas ($UF_6$) with a mixture of steam and hydrogen gas within a fluidized bed of particulate uranium oxide whereby solid uranium oxides (e.g. $U_3O_8$) and hydrogen fluoride (HF) are produced. The $U_3O_8$ is subsequently calcined in a reducing atmosphere to a lower oxide of uranium, e.g. $UO_2$. The two-step method consists of hydrolyzing uranium hexafluoride gas ($UF_6$) with steam to produce uranyl fluoride ($UO_2F_2$) followed by reducing the uranyl fluoride with both steam and hydrogen gas to an oxide of uranium (e.g. $UO_2$).

The uranium oxides commercially produced by such conventional methods comprise a fine relatively porous powder which is not suitable as such for use as fuel in a nuclear reactor. Typically, it is not a free-flowing, relatively uniform sized powder, but rather clumps and agglomerates of particles of varying sizes making it unsuitable to uniformly pack into units of an apt and consistent density. These uranium oxide powders often have very high particle surface areas.

Thus, the raw uranium oxide product derived from the chemical conversion is normally processed through conventional powder refining procedures such as milling and particle classification to provide an appropriate sizing of the powders. Such processing frequently includes blending of uranium oxide powders of different particle sizes or ranges and from different sources. Commonly the powdered uranium oxides are handled and conveyed through such processing operations by pneumatic means. Thus, the uranium oxides can be subjected to extensive exposure to air, and in turn, oxygen.

Aptly processed uranium oxide powders are press molded into "green" or unfired pellets which are subsequently sintered to fuse the discrete powder particles thereof into an integrated body having a unit density of about 98 percent of theoretical for the oxide of uranium, and suitable for utilization in the fuel system of a nuclear reactor.

Uranium dioxide is an exception to the law of definite proportions since "$UO_2$" actually denotes a single, stable phase that may vary in composition from $UO_{1.7}$ to $UO_{2.25}$. The thermal conductivity of uranium oxide decreases with increasing oxygen to uranium ratios. Thus, uranium dioxide having as low an O/U ratio as practical is preferred for use as fuel in nuclear reactors to enable the most efficient passage of heat generated within fissioning fuel material outward to an external heat transfer medium. However, since uranium dioxide powder oxidizes readily in air and absorbs moisture, the oxygen to uranium (O/U) ratio of the powder will increase significantly to an excess of that acceptable for use as nuclear fuel for effective operation of a nuclear reactor.

Uranium oxides suitable for fuel in typical nuclear reactor service can have an O/U ranging from about 1.70-2.015 to 1, and as a practical matter, an O/U ratio of approximately 2.0 and effectively as high as 2.015 has been used since it can be consistently produced in commercial sintering operations. In some instances, it may be practical to maintain the O/U ratio of the uranium dioxide at a level higher than about 2.00 at

2

sintering temperature. For example, it may be more suitable under the particular manufacturing process to produce a nuclear fuel having an O/U ratio as high as 2.195, and then later treat the sintered product in a reducing atmosphere to obtain the desire U/O ratio. However, such an extra operation usually increases costs without added benefits.

Uranium oxides of low O/U ratios exhibit an especially high propensity for spontaneous oxidation to a higher ratio, or actual burning in air, which can be hazardous as well as introducing deleterious properties in the uranium oxides for their intended service. The magnitude of this affinity for oxidation of uranium and the rate of the oxidizing reaction is influenced by a number of conditions, in particular ambient temperatures, oxygen partial pressure and surface area of the oxide of uranium particles. Moreover, since the oxidation reaction of uranium is exothermic, the oxidation of uranium and the rate thereof is self-propagating and accelerating.

This proclivity to further oxidation of uranium oxides presents a significant factor, or potential problem when particulate oxides of uranium are stored or undergo processing such as milling, classifying or blending in unprotected atmospheres not excluding oxygen.

The presence of a high oxygen content in uranium oxides is known to modify its behavior in both processing or fabrication, and in performance of nuclear fuel. For instance, an oxygen ratio in excess of the uranium dioxide $U/O_2$ stoichiometric ratio has a decided effect upon the sintering rate of uranium-oxides by accelerating its completion, and/or enabling temperature reduction.

On the other hand, a high oxygen content in uranium oxide utilized as nuclear fuel in a reactor is generally overall detrimental A high oxygen ratio in uranium oxide nuclear fuel reduces the thermal conductivity of the fuel mass, increases the diametral expansion of the body of fuel under irradiation conditions during operation within a nuclear reactor, and the ratio of fission products released from the uranium oxide fuel is increased, among other effects.

The influence of oxygen content upon uranium oxide nuclear fuel is considered in detail in an article entitled "The Storage Behavior of Uranium Dioxide Powders" by M. J. Bannister, Journal of Nuclear Materials, 26 (1968), pages 174-184.

This invention includes a method for forming a protective hydrate surface layer onto the surface portion of particulate oxide of uranium newly produced in a water-containing environment consisting of subjecting said particulate oxide of uranium to the combination of :

a. an atmosphere containing oxygen in a concentration of 0.03 to 3.0 percent by volume;
b. a temperature within the range of 40 to 250°C;
c. for a period of at least 20 minutes up to 120 minutes; and
d. cooling the particulate oxide of uranium to a temperature of at least 25°C.

The method of this invention provides a uranium oxide product exhibiting a stabilized oxygen content substantially of the level initially introduced therein and which can be further handled, stored and/or processed in air or other oxygen containing atmospheres without significant changes or increases in the O/U ratio.

It is a primary object of this invention to provide means for preventing the spontaneous or uncontrolled surface oxidation, or pyrophoric reaction of uranium oxides.

It is also an object of this invention to provide a treatment for thermodynamically unstable oxides of uranium which fixes and preserves the O/U ratio of uranium oxide.

It is an additional object of this invention to provide a method for passivating the surface of particulate oxides of uranium with an oxidation resisting protective hydrate surface.

It is a further object of this invention to provide a method for forming protective hydrate surface layers on particulate oxides of uranium that inhibit oxygen chemisorption on exposed surface areas of particulate uranium oxide.

It is a still further object of this invention to provide oxides of uranium in particulate form which are resistant to oxidation and stable when handled, stored or processed in air or other oxidizing atmospheres.

It is another object of this invention to provide unstable particulates oxides of uranium with lasting resistance to uncontrolled oxidation of the particle surfaces, including high surface area particles.

Figure 1 of the drawings comprises a flow sheet block diagram of the process steps for the practice of the method of the invention;
Figure 2 of the drawing comprises a diagram of a treated product of the invention;
Figure 3 of the drawings comprises a graph of oxidation rate per gram of uranium dioxide;
Figure 4 of the drawings comprises a graph of monohydrate formation with respect to temperatures;

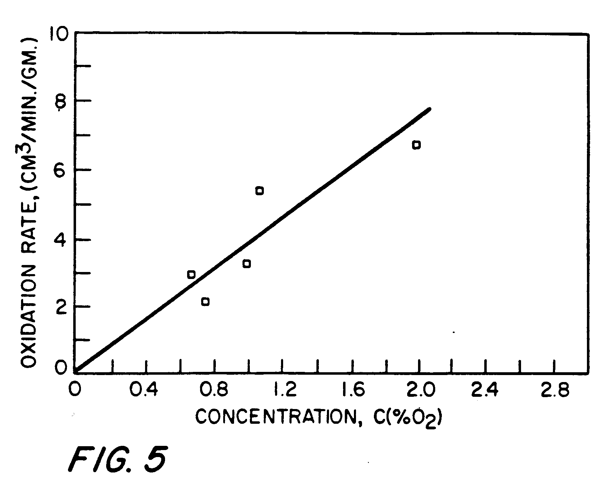

Figure 5 of the drawings comprises a graph of the effect of the oxygen concentration of the atmosphere upon the oxidation rate;

This invention comprises the discovery of an effective and practical means for passivating unstable

3

oxides of uranium which enhances the properties of the oxides for subsequent processing and use, without detracting from their beneficial attributes, and the resulting passivated oxygen stable uranium oxides. The means of this invention comprise a combination of a specific sequence of conditions which are applied as a treatment to unstable oxides of uranium to overcome their normal affinity for reacting with oxygen. Specifically, this invention entails subjecting the unstable oxides of uranium to a given atmosphere while maintained at a specific temperature range over a limited period of time. Thereafter the treated uranium oxide is promptly returned to approximately room or ambient temperatures.

The oxides of uranium treated according to this invention typically includes the lower order oxides of uranium comprising those having an oxygen to uranium ratio range of about 1.7 to about 2.25/1, such as uranium dioxide ($UO_2$), and thus which are unstable with a predisposition for oxidation to a higher order, for example to $U_3O_8$, $U_3O_7$, $U_4O_9$, etc. upon exposure to air or other oxidizing atmospheres. A common type of uranium oxides for passivation according to the precepts of this invention consists of newly produced uranium dioxide for use in producing nuclear fuel having the usually desired low order oxide contents of an oxygen ratio of 1.8 to 2.2/1 and a relatively pristine exposed particle surface.

The occurrence of high order oxides in the uranium oxides used in the manufacturing operations for producing nuclear fuel causes ceramic defects in the sintered uranium oxide pellets such as nonuniform grain size, large open and closed porosity, low sinter density, pits, and high densification. Accordingly, precautions of one means or another should be employed to preclude oxygen as the source of these problems or to control the inherent affinity of low order oxides of uranium for further oxidation to high levels of oxygen content.

In accordance with this invention, unstable oxides of uranium are subjected to a controlled atmosphere containing minuscule proportions of oxygen with the balance an inert or non-oxidizing gaseous medium, such as argon, nitrogen, carbon dioxide, carbon monoxide, methane and the like, and mixtures thereof. The oxygen content for the treatment of the invention should comprise 0.03 up to 3.0 percent by volume of the atmosphere. Preferably for most applications of the invention, the oxygen proportion of the ambient treatment atmosphere is 0.5 to 2.0 percent by volume.

This controlled atmosphere of appropriate gaseous mixtures is supplied for contacting the uranium oxides throughout the treatment preferably at a rate of 0.14 to 0.28 liter (0.005 to 0.010 cubic feet) per gram weight of the uranium oxide (5 to 10 $ft^3$/Kg). The treatment of small amounts of uranium oxides can of course be heated with a static controlled atmosphere of adequate volume provided the temperature is maintained within prescribed conditions.

Further, in accordance with this invention, the unstable oxides of uranium, while exposed to the controlled atmosphere with the given oxygen content, are maintained in such an environment while held at a temperature within the range of 40 to 250°C. Preferably, the temperature conditions applied for the treatment comprise a range of 50 up to 200°C.

The apt temperature conditions for the process are most expediently maintained by removing the thermal energy generated in the exothermic oxidation reaction with the gaseous flow supplying the controlled atmosphere. A substantially continuous flow of the oxygen-containing gas mixture passing through the system in contact with the uranium oxide will convey away unwanted heat and govern the oxidation reaction. Thus, a balance between the rate of oxidation and the rate of heat removal by gas convection is preferred.

The duration for the treatment of oxides of uranium by subjecting to the specified atmosphere and temperature is for a time period of at least 20 minutes up to 120 minutes. Preferably, the treatment is carried out over a relatively brief and thus economical time of 30 minutes up to 60 minutes, depending of course to a considerable degree upon the capacity of the gas treating equipment and the volume of uranium oxide material undergoing treatment.

The treatment of this invention can be effected in any suitable solid-vapor contact apparatus provided with ambient heat controlling means such as commercial fluid bed contact equipment having internal atmosphere gas flow and controlling means. Other suitable devices for carrying out the method of this invention include rotary cylinder or drum systems designed for countercurrent gas/powder flow, and reactors that provide for powder and gas to continuously flow through the unit. Both fluid bed and rotary reactor systems provide effective particulate solid/gas mixing, which is the major requirement for the needed simultaneous heat and mass transfer with chemical reaction.

The mechanism of this invention, produced by the foregoing imposed conditions of atmosphere, temperature and time, comprises a controlled surface oxidation reaction which produces a protective hydrate surface layer or coating over the uranium oxide particles that inhibits subsequent oxygen chemisorption. The passivating surface of hydrate formed comprises a monohydrate - uranyl hydroxide - ($UO_2(OH)_2$) or dihydrate - uranyl hydroxide hydrate - ($UO_2(OH)_2 \cdot H_2O$), and typically a combination of both

4

the monohydrate and dihydrate. Moreover, there is evidence of the formation of a second body or intermediate layer between the uranium oxide particle and the protective hydrate surface layer or coating, which is believed to consist of $U_4O_9$ or $UO_{2+x}$.

The proportion of either passivating hydrate formed, monohydrate or dihydrate, is generally controlled by the temperature of the surface of the uranium oxide particles. At a surface temperature of above about 100°C, the controlled oxidation reaction primarily forms the monohydrate. Below about 100°C, the controlled oxidation of the surface primarily forms the dihydrate. The proportion of monohydrate formed increases as the temperature of the surface reaction increases.

The two hydrate compounds, monohydrate and dihydrate, exhibit different properties as shown below:

| | PROPERTIES | |
|---|---|---|
| Description | Monohydrate ($UO_2(OH)_2$) | Dihydrate ($UO_2(OH)_2 \cdot H_2O$) |
| Density | 6.70 | 5.0 |
| Color | Black | Brown |
| Crystal Structure | Two methods of bonding uranyl group | Water interleaved between layers |

The controlled surface oxidation pursuant to the precepts at this invention produces a hydrate layer or coating of a thickness of $3.10^{-4}$ $\mu$m to $10^{-3}$ $\mu$m (3 to 10 Angstroms)

Upon completion of the formation of a passivating hydrate layer covering the uranium oxide particles, the treated material should be promptly cooled to room temperature. Cooling quickly to at least 25°C completes the crystallization process of the newly formed hydrate and prevents an accelerated rapid continuing oxidation reaction.

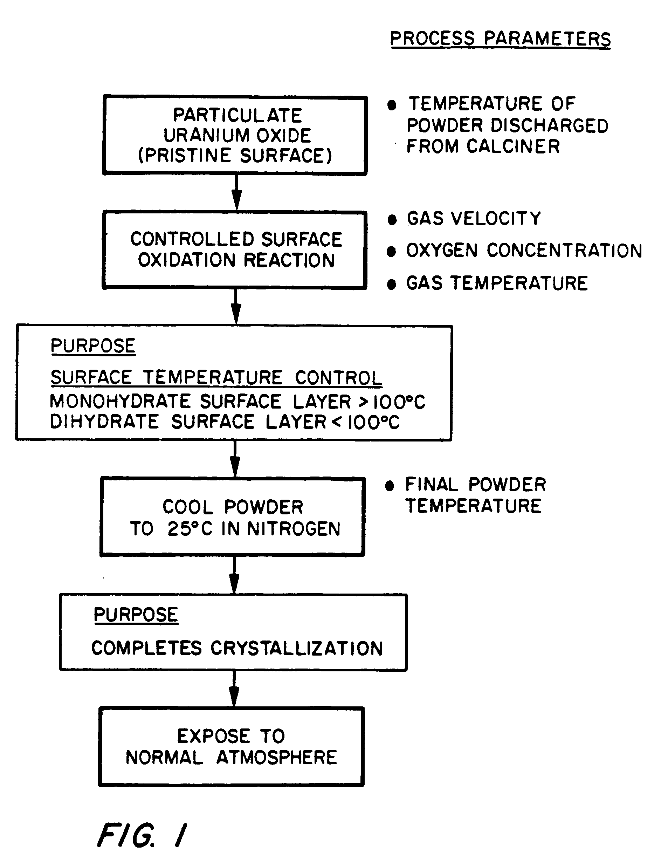

The overall combination of the specific sequence of conditions for carrying out the method of this invention is illustrated in the block diagram of basic steps of Figure 1.

Several of the conditions inherent or imposed in the carrying out of the passivation treatment of this invention, such as initial or pretreatment temperature of the uranium oxide material, treatment atmosphere temperature, surface temperature of the uranium oxide material undergoing treatment, and oxygen concentration of treatment atmosphere, are especially significant in the practice of the method. For example, increases in the proportion of oxygen in the treating atmosphere above about 2 percent by volume significantly raises the rate of oxidation and the surface temperature of the particles of uranium oxide material undergoing treatment.

The surface temperature of the particles of the uranium oxide material during the oxidation treatment is determined by the following conditions:

(1) Rate of diffusion of oxygen from the atmosphere to the surface of the particles of uranium oxide.
(2) Rate of oxidation.
(3) Rate of cooling by the environment.
(4) Specific surface area (particle size) of the particles of uranium oxide.
(5) Temperature of the oxygen containing atmosphere.

Mathematically, these parameters are related by the following equations:

$$(1) \quad T_s = \frac{\text{Heat Produced by Oxidation Reaction}}{\text{Cooling Rate of Gas}} + \text{Gas Temp.}$$

$$(2) \quad T_s = \frac{r(\Delta H)}{hs_p} + T_g$$

$T_s$ = Surface temperature
$T_g$ = Gas temperature
$r$ = Oxidation rate = $k(v)^*C(\%O_2)$

EP 0 355 438 B1

$\Delta H$ = Heat of reaction

$h$ = Heat transfer coefficient $v^{1.3}$

$S_p$ = Specific surface area

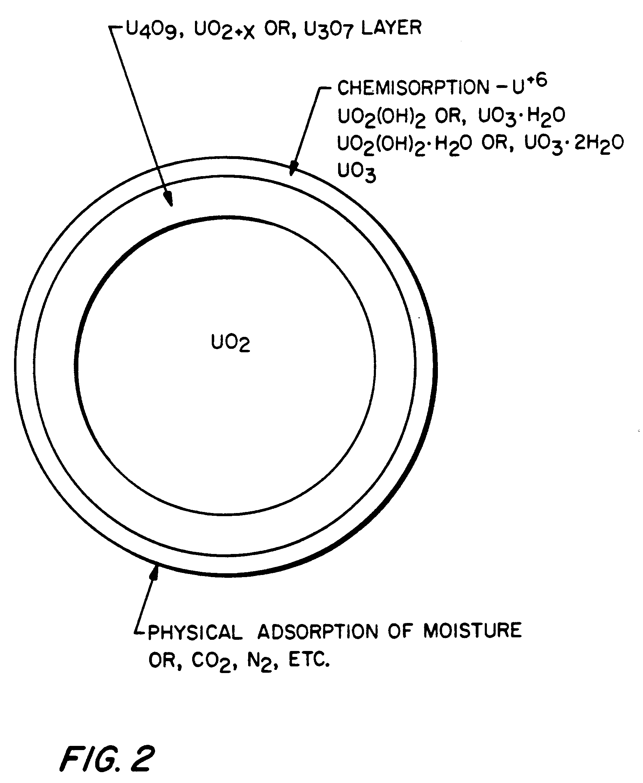

Experimental measurements demonstrate that the uranium oxide material oxidation rate - r - varies linearly both with the atmospheric movement velocity - v - and oxygen concentration expressed as percent oxygen in the atmosphere - $C(\%O_2)$, note Figure 2. When multiplied by the heat of reaction ($\Delta H$), the numerator in the first term of equation 2 represents the amount of heat generated by the oxidation reaction.

On the other hand, the cooling rate, controlled by the gas-solid heat transfer coefficient, h, is proportional to velocity to the 1.3 power (1, 2, and 3). These two effects (first term in equation 2) combine to reduce the surface temperature as the velocity is increased at constant oxygen concentration, <1.5 percent. The ratio of heating to cooling (the first term) varies inversely with velocity to the 0.3 power. Consequently, even through the oxidation rate and total heat of reaction increase with velocity, heat transfer to the gas stream is sufficient to cool the powder and reduce the surface temperature at these low oxygen concentrations.

The above gas cooling characteristics provide a means for controlling the oxidation process. In the laboratory, a uniform O/U ratio over a (10 inch) 25.4cm, test specimen length was obtained for short oxidation times, a few minutes, and high surface temperatures A monohydrate surface was formed without the presence of high order oxides. This was accomplished by increasing the gas velocity a factor of 50 from 0.3 cm/sec to 16.6 cm/sec.

Thus, as the gas flow velocity in the system approaches zero, the heat of reaction increases the uranium oxide particle temperature substantially, and accelerates the oxidation reaction whereby the uranium oxide may burn. Equation (2) above demonstrates this effect quantitatively.

A low gas velocity or a stagnant gas heat transfer coefficient, such as that which exits in a 16.65 l (5 gallon)container, produces a high surface temperature as indicated by the first term in the above equation.

Accordingly, the rate of the surface oxidation is controlled by the velocity of the gas stream and the oxygen concentration thereof. Mass transfer of oxygen to the particle surface controls the reaction rate since the surface oxidation reaction is extremely fast. Consequently, the overall reaction rate is proportional to the velocity.

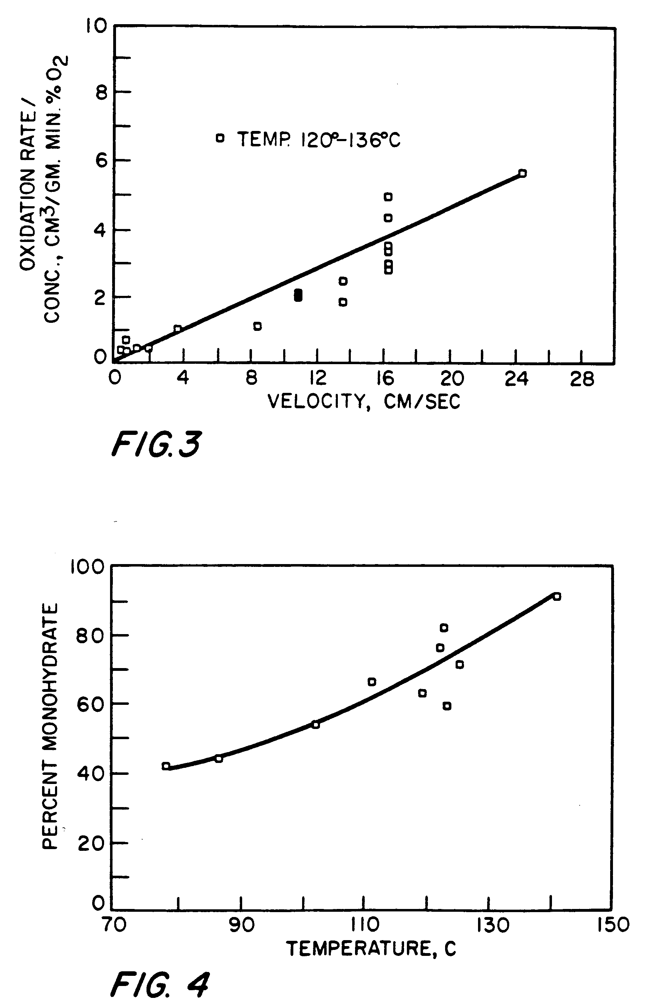

The effect of uranium oxide particle surface temperature on the proportion of monohydrate formed thereon is shown in Figure 3. The monohydrate of the surface layer composition produced increases with surface temperature. Above 100°C, the composition is over 50 percent monohydrate. Below 100°C, a higher percentage of the dihydrate surface compound is formed.

To control the type and/or ratios of the hydrates produced in the passivation process of this invention requires some governing of the following conditions:

(1) Initial temperature of the particulate uranium oxide material.

(2) Oxygen concentration of atmosphere.

(3) Velocity of the oxygen containing atmosphere

(4) Atmosphere temperature during the reaction.

(5) Final temperature of treated particulate uranium oxide material.

The effect of a high oxygen concentration in the atmosphere suggests why untreated particulate uranium oxide burns on exposure to air which contains about 20 percent oxygen.

Figure 4 shows the linear relationship for the oxidation rate and oxygen concentration with an atmosphere at a velocity of about 16.4 centimeters per second. Based on these factors, the oxidation rate data at other velocities, note Figure 3, were normalized with respect to a linear oxygen concentration of the atmosphere.

Increasing the oxygen concentration of the atmosphere above 2.0 percent volume raises the oxidation rate and surface temperature of the uranium oxide particles as shown in equation 2. Moreover high oxygen concentrations are difficult to control because of the relatively weak velocity effect - v -. An increase in the oxygen concentration from 2 percent to 3 percent, and therefore a 50 percent increase in the heating rate, requires at least a factor of four increase in gas velocity to cool the uranium oxide material. Usually, this capacity for cooling is not available and, as a result, uranium dioxide will burn uncontrollably.

Furthermore, if either the hydrate surface layer or coating formed over this particulate uranium oxide material is too thin or its crystallization not completed by cooling down to about 25°C, particulate uranium dioxide remaining at temperatures substantially exceeding 25°C will burn upon exposure to air.

The hydrate layer or coating produced by the means of this invention covering the surface of the particles of uranium oxide reduce the rate of oxygen diffusion from the air and thus prevent accelerated oxidation, overheating, and eventual burning of the uranium oxide.

6

An example of process conditions for the practice of the method of this invention, and the characteristics of the thus treated material resulting therefrom are as follows:

EXAMPLE

A nine kilogram sample of newly produced powdered uranium dioxide was subjected to the given passivation treatment conditions in fixed bed gas treatment equipment.

Initial temperature - about 20°C room temperature.

Oxygen concentration of atmosphere - about 2 percent oxygen with about 98 percent nitrogen

Treatment temperature - 50°C starting temperature plus 113°C maximum temperature.

Time of treatment - 33 minutes.

Amount of oxygen - 52328 cubic centimeters.

Cooled to about 25°C

The properties of the above passivation treated uranium oxide product, compared with the same untreated uranium oxide, are given in the following table:

| Surface Layer Chemistry | Uranium Oxide Treatment | |
|---|---|---|
| | Passivation Treatment | Untreated (Normal Production) |
| Percent Monohydrate | 45.1 | 21.2 |
| Percent Dihydrate | 54.9 | 78.8 |
| Hydrate Layer Thickness (Angstroms) $\mu$m | (6.7) $6.7 \times 10^{-4}$ | (3.5) $3.5 \times 10^{-4}$ |
| U409 Layer Thickness (Angstroms) $\mu$m | (102.5) $1.025 \times 10^{-2}$ | (21.2) $0.212 \times 10^{-2}$ |
| O/U | 2.12 | 2.03 |
| Surface Area m2/gm | 2.7 | 2.8 |

**HYDRATE LAYER THICKNESS INCREASE**

$$\frac{\text{Passivated Powder}}{\text{Normal Production}} \div \frac{6.7}{3.5} = 1.9$$

**SECOND LAYER, U409, THICKNESS INCREASE**

$$\frac{\text{Passivated Powder}}{\text{Normal Production}} = \frac{102.5}{21.2} = 4.8$$

**Claims**

1. A method for forming a protective hydrate surface layer onto the surface portion of particulate oxide of uranium newly produced in a water-containing environment consisting of subjecting said particulate oxide of uranium to the combination of:

   a. an atmosphere containing oxygen in a concentration of 0.03 to 3.0 percent by volume;

   b. a temperature within the range of 40 to 250 °C;

   c. for a period of at least 20 minutes up to 120 minutes; and

   d. cooling the paticulate oxide of uranium down to a temperature of at least 25 °C.

2. The method of claim 1, wherein the particulate oxides of uranium are subjected to a temperature within the range of 40 to 100 °C.

EP 0 355 438 B1

3. The method of claim 1, wherein the particulate oxides of uranium are subjected to a temperature within the range of 100 to 250 °C.

4. The method of claim 2, wherein the protective hydrate surface layer on the particle surfaces is predominantly a dihydrate.

5. The method of claim 3, wherein the protective hydrate surface layer on the particle surface is predominantly a monohydrate.

6. The method of claim 3, wherein the particulate oxides of uranium are subjected to a temperature within the range of 100 to 220°C.

7. The method according to anyone of claims 1, 4, and 5 wherein the oxygen concentration of the atmosphere is 0.5 to 2.0 percent.

8. The method of claim 7, wherein the particulate oxides of uranium are subjected to the oxygen containing atmosphere and temperature for a period of 30 minutes to 60 minutes.

9. The method of claim 1 wherein:
   a. said atmosphere containing oxygen has an oxygen concentration of 2.0 percent by volume;
   b. said temperature is within the range of 50 to 200°C;
   c. said period is of at least 30 minutes up to 60 minutes.

10. The method of claim 9, wherein said temperature is within the range of 50 to 100°C to produce a protective hydrate surface layer on the particle surface which is predominantly a dihydrate.

11. The method of claim 9, wherein said temperature is within the range of 100 to 200°C to produce a protective hydrate surface layer on the particle surface which is predominantly a monohydrate.

12. The method of claim 9, wherein the atmosphere containing about 2.0 percent by volume of oxygen is applied in a continuous flow whereby heat of the oxidation reaction is removed simultaneous with the reaction.

13. The method according to anyone of claims 1, 2, 3, 6, 7, 8 and 9 wherein the atmosphere containing oxygen is applied at a flow rate of 0.14 to 0.28 liter (0.005 to 0.010 cubic feet) per gram weight of the uranium oxide.

**Patentansprüche**

1. Verfahren zum Herstellen einer schützenden Hydrat-Oberflächenschicht auf dem Oberflächenteil von teilchenförmigem Uranoxid, das in einer wasserhaltigen Umgebung frisch hergestellt ist, bestehend daraus, daß man das teilchenförmige Uranoxid der Kombination von:
   a. einer Atmosphäre, die Sauerstoff in einer Konzentration von 0,03 bis 3,0 Vol.-% enthält,
   b. einer Temperatur innerhalb des Bereiches von 40 bis 250°C,
   c. für eine Dauer von mindestens 20 Minuten bis zu 120 Minuten aussetzt, und
   d. das teilchenförmige Uranoxid bis zu einer Temperatur von mindestens 25°C abkühlt.

2. Verfahren nach Anspruch 1, worin die teilchenförmigen Uranoxide einer Temperatur innerhalb des Bereiches von 40 bis 100°C ausgesetzt werden.

3. Verfahren nach Anspruch 1, worin die teilchenförmigen Uranoxide einer Temperatur innerhalb des Bereiches von 100 bis 250°C ausgesetzt werden.

4. Verfahren nach Anspruch 2, worin die schützende Hydrat-Oberflächenschicht auf den Teilchenoberflächen vorwiegend ein Dihydrat ist.

5. Verfahren nach Anspruch 3, worin die schützende Hydrat-Oberflächenschicht auf der Teilchenoberfläche vorherrschend ein Monohydrat ist.

8

**6.** Verfahren nach Anspruch 3, worin die teilchenförmigen Uranoxide einer Temperatur innerhalb des Bereiches von 100 bis 220°C ausgesetzt werden.

**7.** Verfahren nach irgendeinem der Ansprüche 1, 4 und 5, worin die Sauerstoffkonzentration der Atmosphäre im Bereich von 0,5 bis 2,0% liegt.

**8.** Verfahren nach Anspruch 7, worin die teilchenförmigen Uranoxide der sauerstoffhaltigen Atmosphäre und der Temperatur für eine Dauer von 30 bis 60 Minuten ausgesetzt werden.

**9.** Verfahren nach Anspruch 1, worin:
    a. die sauerstoffhaltige Atmosphäre eine Sauerstoffkonzentration von 2,0 Vol.-% aufweist,
    b. die Temperatur innerhalb des Bereiches von 50 bis 200°C liegt,
    c. die Dauer mindestens 30 bis zu 60 Minuten beträgt.

**10.** Verfahren nach Anspruch 9, worin die Temperatur innerhalb des Bereiches von 50 bis 100°C liegt, um eine schützende Hydrat-Oberflächenschicht auf der Teilchenoberfläche zu schaffen, die vorwiegend ein Dihydrat ist.

**11.** Verfahren nach Anspruch 9, worin die Temperatur im Bereich von 100 bis 200°C liegt, um eine schützende Hydrat-Oberflächenschicht auf der Teilchenoberfläche zu schaffen, die vorwiegend ein Monohydrat ist.

**12.** Verfahren nach Anspruch 9, worin die Atmosphäre, die etwa 2,0 Vol.-% Sauerstoff enthält, in einer kontinuierlichen Strömung angewandt wird, wobei die Wärme der Oxidationsreaktion gleichzeitig mit der Reaktion entfernt wird.

**13.** Verfahren nach irgendeinem der Ansprüche 1, 2, 3, 6, 7, 8 und 9, worin die sauerstoffhaltige Atmosphäre mit einer Strömungsrate von 0,14 bis 0,28 Liter (0,005 bis 0,010 Fuß$^3$) pro Gramm Gewicht des Uranoxids benutzt wird.

**Revendications**

**1.** Méthode de formation d'une couche d'hydrate superficielle protectrice sur la surface de particules d'oxyde d'uranium préparées fraîchement dans un environnement contenant de l'eau, consistant à soumettre lesdites particules d'oxyde d'uranium à l'ensemble des conditions suivantes :
    a. une atmosphère contenant de l'oxygène à une concentration de 0,03 à 3,0 % en volume,
    b. une température comprise entre 40 et 250 °C,
    c. pendant une période d'au moins 20 minutes et jusqu'à 120 minutes, et
    d. refroidissement des particules d'oxyde d'uranium à une température au moins égale à 25 °C.

**2.** Méthode conforme à la revendication 1, dans laquelle les particules d'oxyde d'uranium sont exposées à une température comprise entre 40 et 100°C.

**3.** Méthode conforme à la revendication 1, dans laquelle les particules d'oxyde d'uranium sont exposées à une température comprise entre 100 et 250°C.

**4.** Méthode conforme à la revendication 2, dans laquelle la couche d'hydrate superficielle protectrice sur la surface des particules est majoritairement constituée de dihydrate.

**5.** Méthode conforme à la revendication 3, dans laquelle la couche d'hydrate superficielle protectrice sur la surface des particules est majoritairement constituée de monohydrate.

**6.** Méthode conforme à la revendication 3, dans laquelle les particules d'oxyde d'uranium sont exposées à une température comprise entre 100 et 220°C.

**7.** Méthode conforme à une quelconque des revendications 1, 4 et 5, dans laquelle la concentration d'oxygène de l'atmosphère est de 0,5 à 2,0 %.

8. Méthode conforme à la revendication 7, dans laquelle les particules d'oxyde d'uranium sont exposées à l'atmosphère contenant de l'oxygène et à la température pendant une période de 30 minutes à 60 minutes.

9. Méthode conforme à la revendication 1, dans laquelle
   a. ladite atmosphère contenant de l'oxygène possède une concentration en oxygène de 2,0 % en volume,
   b. ladite température est comprise dans le domaine de 50 à 200 °C,
   c. ladite période est au moins égale à 30 minutes et au plus égale à 60 minutes.

10. Méthode conforme à la revendication 9, dans laquelle ladite température est comprise dans le domaine de 50 à 100 °C afin de produire une couche d'hydrate superficielle protectrice à la surface des particules qui est majoritairement constituée de dihydrate.

11. Méthode conforme à la revendication 9, dans laquelle ladite température est comprise dans le domaine de 100 à 200 °C afin de produire une couche d'hydrate superficielle protectrice à la surface des particules qui est majoritairement constituée de monohydrate.

12. Méthode conforme à la revendication 9, dans laquelle l'atmosphère contenant environ 2,0 % en volume d'oxygène est appliquée en un flux continu, qui élimine simultanément la chaleur de la réaction d'oxydation.

13. Méthode conforme à une quelconque des revendications 1, 2, 3, 6, 7, 8 et 9, dans laquelle l'atmosphère contenant de l'oxygène est appliquée avec un rapport de 0,14 à 0,28 litres (0,005 à 0,010 pied$^3$) par gramme d'oxyde d'uranium.

EP 0 355 438 B1

## PROCESS PARAMETERS

Flowchart:

**PARTICULATE URANIUM OXIDE (PRISTINE SURFACE)**
- • TEMPERATURE OF POWDER DISCHARGED FROM CALCINER

↓

**CONTROLLED SURFACE OXIDATION REACTION**
- • GAS VELOCITY
- • OXYGEN CONCENTRATION
- • GAS TEMPERATURE

↓

**PURPOSE**

SURFACE TEMPERATURE CONTROL
MONOHYDRATE SURFACE LAYER > 100°C
DIHYDRATE SURFACE LAYER < 100°C

↓

**COOL POWDER TO 25°C IN NITROGEN**
- • FINAL POWDER TEMPERATURE

↓

**PURPOSE**

COMPLETES CRYSTALLIZATION

↓

**EXPOSE TO NORMAL ATMOSPHERE**

FIG. 1

11

$U_4O_9$, $UO_{2+x}$ OR, $U_3O_7$ LAYER

CHEMISORPTION – $U^{+6}$
$UO_2(OH)_2$ OR, $UO_3 \cdot H_2O$
$UO_2(OH)_2 \cdot H_2O$ OR, $UO_3 \cdot 2H_2O$
$UO_3$

$UO_2$

PHYSICAL ADSORPTION OF MOISTURE
OR, $CO_2$, $N_2$, ETC.

*FIG. 2*

FIG. 3

FIG. 4

FIG. 5